# EUROPEAN PATENT SPECIFICATION

(11) **EP 0 709 398 B1**
(45) Date of publication and mention of the grant of the patent: **20.05.1998**
(21) Application number: 95115108.3
(22) Date of filing: 26.09.1995
(51) Int. Cl.: C08C 19/14, C08F 8/22

(54) **Process for preparing chlorinated aliphatic polymers**
Verfahren zur Herstellung von chlorierten, aliphatischen Polymeren
Procédé de préparation de polymères aliphatiques chlorés

(30) Priority: 27.10.1994 IT MI942194
(43) Date of publication of application: 01.05.1996
(73) Proprietor: INDUSTRIE CHIMICHE CAFFARO S.p.A., I-20121 Milano (IT)
(72) Inventor: Pontoglio, Enrico, I-25100 Brescia (IT); Parodi, Sandro, I-25080 Nuvolento (Brescia) (IT); Danesi, Enrico, I-25018 Montichiari (Brescia) (IT); Archetti, Sandro, I-25050 Provaglio d'Iseo (Brescia) (IT)
(74) Representative: Forattini, Amelia

(56) References cited:
- EP-A- 0 157 557
- BE-A- 857 285
- DE-B- 1 178 600
- FR-A- 2 410 006
- GB-A- 1 299 710
- CHEMICAL ABSTRACTS, vol. 91, no. 22, 26 November 1979 Columbus, Ohio, US; abstract no. 176150s, MORITA, TORU 'CHLORINATED POLYMERS' page 29; column 2; & JP-A-79 081 395 (SANYO-KOKUSAKU PULP CO., LTD.) 28 June 1979
- CHEMICAL ABSTRACTS, vol. 101, no. 10, 3 September 1984 Columbus, Ohio, US; abstract no. 73625w, G. KALZ 'RECOVERY OF SOLVENTS DURING DISCHARGING OF SOLUTIONS OF CHLORINATED POLYOLEFINS' page 37; column 1; & DD-A-205 172 (INGENIEURHOCHSCHULE KOETHEN) 21 December 1983

## Description

The present invention relates to a process for preparing chlorinated aliphatic polymers by chlorinating an aliphatic polymer in a solution of a chlorinated solvent, so that they can be used as binders for the preparation of paints. More particularly, the invention relates to reducing the residual content of chlorinated solvent in the polymer to very low levels, i.e. below 0.2%. It has in fact been observed that the chlorinated solvent remains firmly embedded in chlorinated polymers. Even more particularly, the chlorinated solvent is carbon tetrachloride, alone or mixed with other chloromethanes, and the chlorinated polymer is chlorinated rubber or chlorinated polyethylene.

A process for preparing chlorinated aliphatic polymers is known, for example from British patent No. 1.515.537. These polymers are obtained by chlorination with gaseous chlorine of aliphatic polymers such as for example rubber, polyisoprene, polybutadiene, polyethylene, polypropylene, etc., dissolved in the above mentioned chlorinated solvent. The solution is then treated with hot water, causing the precipitation of the chlorinated polymer; most of the solvent is removed and the resulting product is dried. However, a certain amount of chlorinated solvent (4-8% by weight), particularly carbon tetrachloride, remains trapped in the chlorinated polymer and is difficult to remove. Reduction of the levels of this solvent in the chlorinated polymer is difficult to achieve with conventional methods and in any case it is practically impossible to achieve levels below 3%.

On the other hand, the presence of residues of halogenated solvents, such as for example carbon tetrachloride, leads to severe drawbacks during use of the chlorinated polymer. Indeed, if the polymer is dissolved in appropriate solvents for various uses, for example to prepare paints, the carbon tetrachloride or other halogenated solvents contained in the polymer are released, creating environmental toxicity problems, contaminating the atmosphere, and particularly damaging the ozone layer of the stratosphere.

Methods for further reducing the residual chlorinated solvent in the chlorinated polymer are known. In particular, a process has been described that does not require particular treatments but merely includes various substances in the solution of the chlorinated polymer in the halogenated solvent before precipitation with boiling water or steam. These substances, termed hereinafter plasticizing additives, are for example mixtures of chlorinated paraffins and alcohols described in European patent No. 0 157 557, conventional plasticizers described in British patent No. 1.442.876, ethoxylated aliphatic alcohols described in US patent No. 4.172.104, particular olefin or chlorinated olefin polymers or copolymers described in British patent No. 1.515.537, lubricants, described in BE-A-857 285.

These simple solutions allow to reduce the carbon tetrachloride to values even below 1% in proportion to the added amount of plasticizing additive. However, lower levels of concentration of the chlorinated solvent, and residual percentages of less than 0.2% or better still lower than 0.1% in the case of carbon tetrachloride, are increasingly being demanded.

In order to reach these values it is necessary to include in the chlorinated polymer solution rather large amounts of plasticizing additive, for example more than 10% by weight with respect to the chlorinated polymer in the case of chlorinated rubber. The presence of such large amounts of these plasticizing additives, however, entails several problems. First of all, difficulties in the production process have been observed due to the tackiness that the polymer assumes especially at the high temperatures used during the precipitation and drying steps. It is also generally undesirable and sometimes unacceptable in commercial formulas and applications of chlorinated rubber.

The introductory part and the examples of European patent application No. 0 289 132 teach that it is possible to both limit the percentage of plasticizing additive to acceptable values and to remove the carbon tetrachloride to the above mentioned levels by raising the drying temperature above the usual values, which are generally between 60 and 90°C, so as to reach approximately 120°C, which is close to the stability limit of the chlorinated polymer, which for example is around 130°C for chlorinated rubber.

However, this European application also teaches that this process is in fact not practical, because it has poor efficiency and entails a degradation of the product, highlighted in particular by its color change. The chlorinated polymer in fact browns and the color values of its solutions, read on the Gardner scale, are usually too high for the uses for which the chlorinated polymer is produced. Color degradation is a fundamental drawback for a product meant mainly to be used as a binder in the production of paints. Accordingly, this European patent application No. 0 289 132 ends by teaching a treatment based on fluid carbon dioxide in the supercritical or liquid state, indeed to avoid drying at high temperature.

Patent application GB-A-1 299 710 teaches the chlorination in water of ethylene polymers to obtain a chlorine content of from 20 to 55% theorically, and of from 28 to 40% as actually exemplified. This low chlorine content provides elastomeric properties to the final product, which is suitable to be extruded, calandered, etc. The products obtainable from this method are generally insoluble in solvents and cannot be used as binders for the preparation of paints, according to the field of the present invention.

Publication Chemical Abstracts vol 91, N° 22 of November 26, 1979, Abstract N° 176150, corresponding to Japanese patent 79-81395 (Patent Laid-Open N° 54-81395) teaches a process with two solvents instead of a single one. Particularly CCl₄ is first removed, and then the other solvent is added. However, according to this process, both operations and energy consumptions are doubled, because the solvent remotion operation must be carried out two times instead of a single one. This is clearly a serious burden both for the plant side and for the maintenance side. Moreover, the results obtainable are limited because the unremovable residual solvents are comprised between 6.7 and 0.8%. Therefore, even in the better case, these amounts are about three times higher than the amounts required according to the scope of the present invention.

The aim of the present invention is therefore to overcome the above described drawbacks with a process for preparing chlorinated aliphatic polymers which allows to obtain a residual percentage of chlorinated solvent in the polymer, particularly carbon tetrachloride, of less than 0.1-0.2%, although it maintains the advantage of a plasticizing additive level of less than 3%.

Another object of the invention is to obtain a final product which is not degraded and perfectly suitable for all normally required uses.

Another object is to avoid complications in the process, avoiding in particular the use of other substances or adjutants, such as for example liquid carbon dioxide.

Another object is to avoid substantial modifications of conventional equipment, maintaining a per se standard type of operations.

Another object is to provide a process which is cheap, industrially feasible, and does not require excessive energy consumption.

Surprisingly, it has been found that this aim, these objects, and others are achieved with a process for preparing chlorinated aliphatic polymers which includes the following steps:
(a) preparing a solution of an aliphatic polymer in a chlorinated solvent, preferably including carbon tetrachloride;
(b) chlorination with gaseous chlorine of the aliphatic polymer in solution, to obtain a chlorine content higher than 56% preferably higher than 60% by weight;
(c) treating this solution with water, precipitation, and separation of a chlorinated aliphatic polymer;
(d) drying the chlorinated aliphatic polymer at a temperature between 100°C and 130°C, preferably in vacuum or in an inert gas current;
(e) treating the chlorinated aliphatic polymer with gaseous chlorine, performed simultaneously or preferably after step (d); for 0,1 to 6 hours, at a temperature between 20 and 70°C.

It has in fact been observed that this combined treatment, despite including a high-temperature drying step, entails no degradation of the polymer, preserving the physical and mechanical properties of the polymer and particularly its color.

Step (d) can include a preliminary drying, performed at a temperature of less than 100°C, preferably for a period of at least 6 hours. At the end of this preliminary drying, one obtains a dry powder which usually has a solvent content of 0.5 to 2% caused by variability in the operating conditions. This dry powder is dried at high temperature, preferably at 111°C to 120°C, for 0.5 to 6 hours, more preferably 1 to 2 hours.

In step (e), the powdered dry chlorinated polymer is treated with gaseous chlorine, preferably at room temperature, preferably 0.5 to 2 hours. At the end of step (e), the pressure is preferably reduced, more preferably maintaining a temperature of 40 to 70°C.

After step (b) and before step (c) there is an intermediate step during which a plasticizing additive suitable to facilitate solvent release during the subsequent step (c) is added to the solution; the plasticizing additive is preferably added in an amount of less than 5%, more preferably less than 3%. The plasticizing additive is preferably chosen among: a chlorinated paraffin, an alcohol, a conventional plasticizer, an ethoxylated aliphatic alcohol, an olefin polymer, an olefin copolymer, a chlorinated olefin copolymer; more preferably, it is an epoxidized oil, particularly epoxidized soybean oil.

Step (b) is performed at a temperature that is preferably between 60°C and 90°C, more preferably between 70°C and 80°C.

Step (c) preferably includes the use of water at a temperature above 50°C, preferably above 70°C, more preferably boiling. After this, the chlorinated polymer is recovered as white powder, filtered, and optionally dehydrated by pressing.

In order to better describe the process according to the invention, some non-limitative examples of application are provided. In these examples, reference is made to chlorinated rubber as chlorinated polymer and to carbon tetrachloride as chlorinated solvent.

### Example 1

A sample of chlorinated rubber used as initial material was prepared industrially by chlorinating depolymerized 1,4-cis-polyisoprene dissolved in carbon tetrachloride at 70° with chlorine gas, integrated with 3% epoxidized soybean oil, and coagulated in water at 90°C. Then the mixture was filtered, dehydrated by mechanical pressing, dried in vacuum at 90°C, and finally pulverized by grinding before packaging. 200 g of this powdered product (viscosity 19.6 mPa.s at 25°C in a 20% toluene solution, chlorine content 62.4%, residual carbon tetrachloride 0.66%, epoxidized soybean oil content 3%) were loaded into the 1-liter powder flask of a ROTOVAPOR unit, appropriately heated by immersion in an oil bath. Exact temperature measurement was ensured by a thermocouple which was constantly immersed in the chlorinated rubber. In a 20/30 mbar vacuum, the polymer was agitated (rotation rate 55 rpm) for two hours at 116/119°C. After thermal treatment, the carbon tetrachloride content dropped to 0.10%; however, the color measured on the product in a 20% toluene solution had been degraded by 6 units of the Gardner scale (10 units against 4 initial units).

The substance was then transferred into a flask provided with a mechanical agitator with a sickle-shaped paddle and a gas inlet and outlet. Chlorine was injected at ambient temperature, simultaneously starting agitation so as to ensure good contact between the halogen and the powder. After 0.5 hours, the treatment was interrupted and flushing was performed, removing the chlorine first with an air current and then by aspiration in vacuum at 50°C. Then the color of the 20% solution in toluene was checked again and found to have returned to the initial value of 4 on the Gardner scale without altering the carbon tetrachloride content, which was equal to 0.1%. Viscosity and chlorine content of the initial and final samples are identical within the limits of the precision of the analytical method, confirming that the chlorinated rubber thus treated underwent no significant degradation; the behavior of the chlorinated rubber in its main use as binder in the field of paints was accordingly unchanged.

### Example 2

By using the same apparatus, the operations described in example 1 were repeated in more energetic operating conditions. Accordingly, the heat treatment time was extended to 4 hours and chlorination was performed at 55°C for 2 hours. However, the final result was substantially unchanged (CCl₄ = 0.09%, Gardner color 4).

### Example 3

Example 1 was repeated with the same procedure, except for the heating step, which was performed at ambient pressure under a constant flow of nitrogen (50 l/h).

The carbon tetrachloride percentage was again reduced significantly (0.12%) and the color was higher than 10 Gardner units. Subsequent treatment with chlorine, performed at ambient temperature, fully restored the color to the original value (4 Gardner).

### Example 4

Example 1 was repeated, except that a polyisoprene with a lower average distribution of relative molecular masses was used, obtaining a chlorinated rubber with a lower viscosity (11.2 mP.s) than example 1.

After 1 hour of heating at 112-116°C, the CCl₄ content had dropped to 0.05% from an initial value of 0.66%, but the color had degraded from the initial 5 Gardner units to 9. Treatment with chlorine for 2 hours at 50°C restored the color to 3 Gardner units, which is even lower than the initial value.

### Example 5

Example 1 was repeated, except that a polyisoprene with a higher average distribution of relative molecular masses was used, obtaining a chlorinated rubber with a higher viscosity value (46.6 mP.s), with a higher CCl₄ residue (CCl₄ 1.1%) and a low color value (2 Gardner units) with respect to example 1.

The CCl₄ content after thermal treatment at 117-120°C for 4.5 hours was equal to 0,2%. The color on the Gardner scale was higher than 10, but after chlorination (2 hours at 55°C) it returned to the initial value of 2.

## Claims

1. Process for preparing chlorinated aliphatic polymers, comprising the following steps:
(a) preparing a solution of an aliphatic polymer in a chlorinated solvent, preferably comprising carbon tetrachloride;
(b) chlorination with gaseous chlorine of said aliphatic polymer in solution, to obtain a chlorine content higher than 56% preferably higher than 60% by weight;
(c) treating said solution with water, precipitation, and separation of said chlorinated aliphatic polymer;
(d) drying said chlorinated aliphatic polymer at a temperature between 100°C and 130°C, preferably in vacuum or in an inert gas current;
(e) treating said chlorinated aliphatic polymer with gaseous chlorine, performed after said step (d), for 0,1 to 6 hours, at a temperature between 20 and 70°C.

2. Process according to claim 1, wherein said step (d) comprises a preliminary drying performed at a temperature below 100°C, preferably for a period of at least 6 hours.

3. Process according to at least one of the preceding claims, wherein said step (d) is performed at a temperature between 111° and 120°C.

4. Process according to at least one of the preceding claims, wherein said step (d) is performed for 0.5 to 6 hours, preferably 1 to 2 hours.

5. Process according to at least one of the preceding claims, wherein said step (e) is performed at room temperature.

6. Process according to at least one of the preceding claims, wherein said step (e) is performed for 0.5 to 2 hours.

7. Process according to at least one of the preceding claims, wherein at the end of said step (e) the pressure is reduced by aspiration in vacuum, preferably maintaining a temperature between 40 and 70°C.

8. Process according to at least one of the preceding claims, comprising, after said step (b) and before said step (c), an intermediate step in which a plasticizing additive is added to said solution so as to facilitate the release of said solvent in the subsequent step (c), said plasticizing additive being preferably added in an amount of less than 3%.

9. Process according to claim 8, wherein said plasticizing additive is chosen among: a chlorinated paraffin, an alcohol, a conventional plasticizer, an ethoxylated aliphatic alcohol, an olefin polymer, an olefin copolymer, and a chlorinated olefin copolymer.

10. Process according to claim 9, wherein said plasticizing additive is an epoxidized oil, preferably epoxidized soybean oil.

11. Process according to at least one of the preceding claims, wherein said step (b) is performed at a temperature between 60°C and 90°C, preferably between 70°C and 80°C.

12. Process according to at least one of the preceding claims, wherein during said step (c) said water has a temperature above 50°C, preferably above 70°C.

## Patentansprüche

1. Verfahren zur Herstellung von chlorierten, aliphatischen Polymeren, mit den folgenden Schritten:
a) Vorbereiten einer Lösung aliphatischer Polymere in einer chiorierten Lösung, vorzugsweise enthaltend Tetrachlorkohlenstoff;
b) Chlorieren der in der Lösung befindlichen aliphatischen Polymere mit gasförmigem Chlor, um einen Chlorgehalt höher als 58 Gew.-%, vorzugsweise als 60 Gew.-% zu erhalten;
c) Behandeln der Lösung mit Wasser, Trennung und Separierung der chlorierten, aliphatischen Polymere;
d) Trocknen der chlorierten, aliphatischen Polymere bei einer Temperatur zwischen 100°C und 130°C, vorzugsweise unter Vakuum oder in einer Schutzgasströmung; und
e) Behandeln der chlorierten, aliphatischen Polymere mit Chlorgas im Anschluß an Schritt d) für 0,1 bis 6 Stunden bei einer Temperatur zwischen 20°C und 70°C.

2. Verfahren nach Anspruch 1, dadurch gekennzeichnet, daß Verfahrensschritt d) einen vorläufigen Trocknungsvorgang bei einer Temperatur unter 100°C, vorzugsweise für eine Dauer von wenigstens 6 Stunden umfaßt.

3. Verfahren nach wenigstens einem der vorhergehenden Ansprüche, dadurch gekennzeichnet, daß Verfahrensschritt d) bei einer Temperatur zwischen 111°C und 120°C durchgeführt wird.

4. Verfahren nach wenigstens einem der vorhergehenden Ansprüche, dadurch gekennzeichnet, daß Verfahrensschritt d) für 0,5 bis 6 Stunden, vorzugsweise 1 bis 2 Stunden durchgeführt wird.

5. Verfahren nach wenigstens einem der vorhergehenden Ansprüche, dadurch gekennzeichnet, daß Verfahrensschritt e) bei Raumtemperatur durchgeführt wird.

6. Verfahren nach wenigstens einem der vorhergehenden Ansprüche, dadurch gekennzeichnet, daß Verfahrensschritt e) für 0,5 bis 2 Stunden durchgeführt wird.

7. Verfahren nach wenigstens einem der vorhergehenden Ansprüche, dadurch gekennzeichnet, daß am Ende des Verfahrensschritts e) der Druck durch Absaugung unter Vakuum reduziert wird, vorzugsweise unter Aufrechterhaltung einer Temperatur zwischen 40°C und 70°C.

8. Verfahren nach wenigstens einem der vorhergehenden Ansprüche, weiterhin nach Verfahrensschritt b) und vor Verfahrensschritt c) einen Zwischenschritt umfassend, in welchem ein plastifizierendes Additiv der Lösung zugefügt wird, um ein Auslösen der Lösung im folgenden Verfahrensschritt c) zu erleichtern, wobei das plastifizierende Additiv vorzugsweise in einer Menge von weniger als 3 % beigemischt wird.

9. Verfahren nach Anspruch 8, dadurch gekennzeichnet, daß das plastifizierende Additiv gewählt wird aus: einem chlorierten Paraffin, einem Alkohol, einem herkömmlichen Plastifizierer, ethoxyliertem, aliphatischem Alkohol, Olefincopolymer, und einem chlorierten Olefincopolymer.

10. Verfahren nach Anspruch 9, dadurch gekennzeichnet, daß das plastifizierende Additiv ein epoxidiertes Öl, vorzugsweise epoxidiertes Sojabohnenöl ist.

11. Verfahren nach wenigstens einem der vorhergehenden Ansprüche, dadurch gekennzeichnet, daß Verfahrensschritt b) bei einer Temperatur zwischen 60°C und 90°C, vorzugsweise zwischen 70°C und 80°C durchgeführt wird.

12. Verfahren nach wenigstens einem der vorhergehenden Ansprüche, dadurch gekennzeichnet, daß das Wasser während des Verfahrensschritts c) eine Temperatur oberhalb 50°C, vorzugsweise oberhalb 70°C aufweist.

## Revendications

1. Procédé pour préparer des polymères aliphatiques chlorés comprenant les étapes suivantes :
(a) préparation d'une solution d'un polymère aliphatique dans un solvant chloré, comprenant de préférence du tétrachlorure de carbone ;
(b) chloration avec du chlore gazeux dudit polymère aliphatique en solution, pour obtenir une teneur en chlore supérieure à 56%, de préférence supérieure à 60% en poids ;
(c) traitement de ladite solution avec de l'eau, précipitation et séparation dudit polymère aliphatique chloré ;
(d) séchage dudit polymère aliphatique chloré à une température comprise entre 100°C et 130°C, de préférence sous vide ou dans un courant de gaz inerte ;
(e) traitement dudit polymère aliphatique chloré avec du chlore gazeux, effectué après ladite étape (d), pendant 0,1 à 6 heures, à une température comprise entre 20 et 70°C.

2. Procédé selon la revendication 1, dans lequel ladite étape (d) comprend un séchage préliminaire effectué à une température en dessous de 100°C, de préférence pendant une période d'au moins 6 heures.

3. Procédé selon au moins l'une des revendications précédentes, dans lequel ladite étape (d) est effectuée à une température comprise entre 111° et 120°C.

4. Procédé selon au moins l'une des revendications précédentes, dans lequel ladite étape (d) est effectuée pendant 0,5 à 6 heures, de préférence 1 à 2 heures.

5. Procédé selon au moins l'une des revendications précédentes, dans lequel ladite étape (e) est effectuée à température ambiante.

6. Procédé selon au moins l'une des revendications précédentes, dans lequel ladite étape (e) est effectuée pendant 0,5 à 2 heures.

7. Procédé selon au moins l'une des revendications précédentes, dans lequel à la fin de ladite étape (e), la pression est réduite, par aspiration dans le vide, de préférence en maintenant une température comprise entre 40 et 70°C.

8. Procédé selon au moins l'une des revendications précédentes, comprenant, après ladite étape (b) et avant ladite étape (c), une étape intermédiaire dans laquelle un additif de plastification est ajouté à ladite solution, de façon à faciliter l'élimination dudit solvant dans l'étape ultérieure (c), ledit additif de plastification étant ajouté de préférence en une quantité de moins de 3%.

9. Procédé selon la revendication 8, dans lequel ledit additif de plastification est choisi parmi : une paraffine chlorée, un alcool, un plastifiant classique, un alcool aliphatique éthoxylé, un polymère d'oléfine, un copolymère d'oléfine et un copolymère d'oléfine chlorée.

10. Procédé selon la revendication 9, dans lequel ledit additif de plastification est une huile époxydée, de préférence une huile de soja époxydée.

11. Procédé selon au moins l'une des revendications précédentes, dans lequel ladite étape (b) est effectuée à une température comprise entre 60°C et 90°C, de préférence entre 70°C et 80°C.

12. Procédé selon au moins l'une des revendications précédentes, dans lequel durant ladite étape (c), ladite eau a une température supérieure à 50°C, de préférence supérieure à 70°C.
